# EUROPÄISCHE PATENTSCHRIFT

(11) **EP 1 106 905 B1**
(45) Veröffentlichungstag und Bekanntmachung des Hinweises auf die Patenterteilung: **13.12.2006**
(21) Anmeldenummer: 00118924.0
(22) Anmeldetag: 01.09.2000
(51) Int. Cl.: F21S 8/00, G02B 6/00

(54) **Leuchte**
Luminaire
Luminaire

(30) Priorität: 30.11.1999 DE 19957584
(43) Veröffentlichungstag der Anmeldung: 13.06.2001
(73) Patentinhaber: Ludwig Leuchten KG, 86415 Mering (DE)
(72) Erfinder: Ludwig, Alexander, 86492 Heinrichshofen (DE); Csizy, Tibor, 86415 Mering (DE); Rieger, Rudolf, 86415 Mering (DE)
(74) Vertreter: Vetter, Ewald Otto

(56) Entgegenhaltungen:
- WO-A-94/23244
- CH-A- 475 508
- DE-A- 4 237 107
- FR-A- 1 064 946
- US-A- 5 961 198

## Beschreibung

Die Erfindung betrifft eine Leuchte gemäß dem Oberbegriff von Anspruch 1.

Unter dem Begriff "Leuchte" wird hiermit eine Vorrichtung verstanden, welche derart ausgebildet ist, daß sie von einer Lichtquelle, z. B. einer Leuchtstoffröhre oder einer Glühbirne, erzeugtes Licht im Wesentlichen blendfrei abgeben kann.

Gemäß der bevorzugten Ausführungsform erfolgt die blendfreie Lichtabgabe "direkt" in den zu beleuchtenden Raum oder auf eine zu beleuchtende Stelle.

Ferner kann mit der Leuchte nach der Erfindung Licht der Lichtquelle "indirekt" in den zu beleuchtenden Raum oder auf die zu beleuchtende Stelle abgegeben werden, indem dieses Licht gegen eine Decke oder eine Wand dieses Raumes gestrahlt wird, von wo es in den zu beleuchtenden Raum oder auf die zu beleuchtende Stelle reflektiert wird.

Die in den hier beigefügten Zeichnungen dargestellten Ausführungsformen der Erfindung sind derart ausgebildet, daß sie nach unten "direktes" Licht und nach oben "indirektes" Licht abgeben.

Für Erzeugung von blendfreiem Licht ist aus der EP 0495273 B1 eine Flachleuchte bekannt, welche eine transparente Platte aufweist. Die Platte hat eine flache Oberseite und eine mit prismenartigen Rippen versehene Oberseite. Das Licht geht durch die Platte und durch deren Prismenbereiche hindurch. Dabei wird es in den Prismenbereichen mehrfach gebrochen.

Aus der US 5555329 ist eine Lichtleitstruktur bekannt, welche eine Lichtleiterplatte aufweist. Auf einer Oberfläche der Lichtleiterplatte sind Prismenkörper entweder gebildet oder aufgesetzt, so dass Licht aus der Lichtleiterplatte in die Prismenkörper eindringen und dann nach mehrmaliger Lichtbrechung aus dem Prismenkörper in die Außenumgebung austreten kann.

Ähnliche Leuchten, speziell als Hintergrundbeleuchtung, zeigen auch die US 5396350 und die WO 97/26584, DE 43 42 338 A1, DE 43 01 339 A1, DE 43 39 274 A1.

Dokument CH 475 508 A offenbart eine Leuchte gemäß dem Oberbegriff von Anspruch 1.

Durch die Erfindung soll die Aufgabe gelöst werden, eine Leuchte für blendfreies Licht zu schaffen, welche ähnlich wirkt wie die bekannten Leuchten mit Prismenkörpern, jedoch wesentlich preiswerter, konstruktiv einfacher und mit geringerer Bauhöhe herstellbar ist.

Diese Aufgabe wird gemäß der Erfindung durch die kennzeichnenden Merkmale von Anspruch 1 gelöst.

Weitere Merkmale der Erfindung sind in den Unteransprüchen enthalten.

Die Erfindung wird im Folgenden mit Bezug auf die Zeichnungen anhand von bevorzugten Ausführungsformen als Beispiele beschrieben. In den Zeichnungen zeigen die
- Fig. 1 bis 6: eine schematische Seitenansichten von sechs verschiedenen Ausführungsformen von Leuchten gemäß der Erfindung,
- Fig. 7: schematisch eine Unteransicht einer weiteren Ausführungsform einer Leuchte nach der Erfindung,
- Fig .8: einen Querschnitt längs der Ebene VIII-VIII von Fig. 7,
- Fig .9: eine Seitenansicht einer weiteren Ausführungsform einer Leuchte nach der Erfindung,
- Fig. 10: eine Unteransicht der Leuchte von Fig. 9,
- Fig. 11: schematisch eine Seitenansicht einer weiteren Leuchte nach der Erfindung,
- Fig. 12: schematisch eine Draufsicht auf eine nochmals weitere Leuchte nach der Erfindung,
- Fig .13: eine schematische Seitenansicht einer weiteren Ausführungsform einer Leuchte nach der Erfindung.

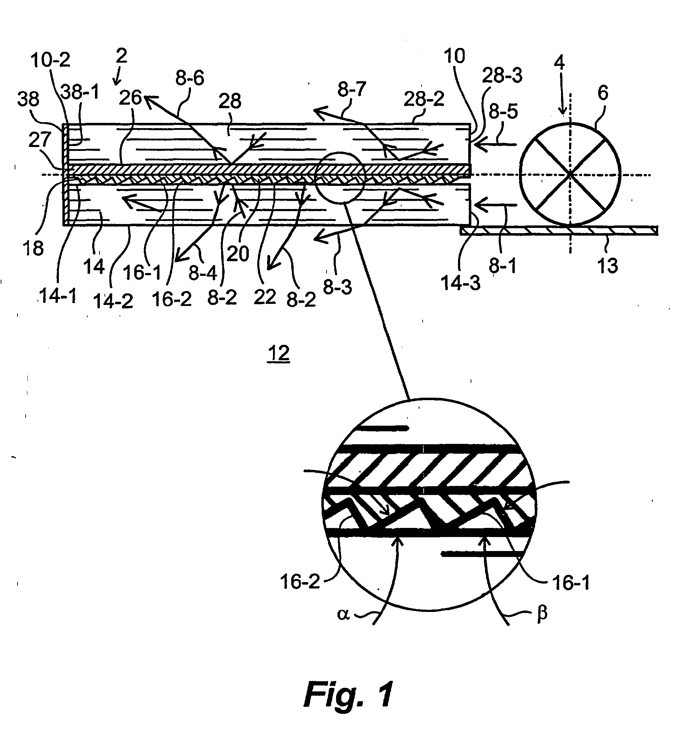

Fig. 1 zeigt eine Leuchte nach der Erfindung mit einer Leuchteneinheit 2, deren Länge und Breite wesentlich größer ist als deren in Höhenrichtung gemessene Dicke. Rechts neben der Leuchteneinheit 2 befindet sich eine Lichtquellenposition 4 für eine Lichtquelle 6, z. B. eine Leuchtstoffröhre, eine Glühbirne oder eine andere bekannte Art. Dadurch gelangt ihr Licht 8 auf eine ihr gegenüberliegende Stirnseite 10 der Leuchteneinheit 2.

Die Lichtquelle 6 ist nach unten zu dem direkt zu beleuchtenden Raumbereich 12 durch ein lichtundurchlässiges Element 13 abgeschirmt. Von der Lichtquelle 6 nach oben oder entgegengesetzt zur Leuchteneinheit 2 abgegebenes Licht kann durch ein ähnliches Element abgeschirmt sein oder gegen eine Decke oder eine Wand eines Raumes gerichtet sein, von wo es als indirektes Licht in den zu beleuchtenden Raumbereich 12 reflektiert wird.

Die Leuchteneinheit 2 enthält eine erste Lichtleiterplatte 14, die eine obere, erste Lichtleitoberfläche 14-1 und eine untere, zweite Lichtleitoberfläche 14-2 aufweist zur Führung von einem Lichtanteil 8-1 der Lichtquelle 6 von einer stirnseitigen Lichteinleitfläche 14-3 durch den Lichleiter 14. Die Lichteinleitfläche 14-3 befindet sich auf der der Lichtquelle 6 gegenüberliegenden Stirnseite 10 der Leuchteneinheit 2.

Die beiden Lichtleitoberflächen 14-1 und 14-2 und die Lichteinleitfläche 14-3 sind, ebenso wie die übrigen Bereiche der Lichtleiterplatte 14, lichtdurchlässig. Dadurch kann ein Teil des durch die Lichtleiterplatte 14 hindurchgeleiteten Lichtes durch ihre beiden Lichtleitoberflächen 14-1 und 14-2 hindurch austreten.

Gegenüber der oben angeordneten ersten Lichtleitoberfläche 14-1 ist eine erste Lichtreflexionsfläche 16 eines lichtundurchlässigen Reflektors 18 angeordnet. Diese erste Lichtreflexionsfläche 16 weist eine sehr große Vielzahl von schräge zueinander und schräg zu der ersten Lichtleitoberfläche 14-1 sich erstreckende Reflexionsflächenbereiche 16-1 und 16-2 auf, welche aus der ersten Lichtleitoberfläche 14-1 austretendes Licht 8-2 durch diese Lichtleitoberfläche 14-1 hindurch in die Lichtleiterplatte 14 hinein zurückreflektieren, wobei mindestens ein Teil des reflektierten Lichtes 8-4 zusammen mit nicht reflektiertem Licht 8-3 durch die nach unten zeigende zweite Lichtleitoberfläche 14-2 aus der Lichtleiterplatte 14 im Wesentlichen blendfrei in den darunter befindlichen Raumbereich 12 austritt.

Mindestens einige, vorzugsweise etwa 50% der Lichtleitflächenbereiche 16-1 und 16-2 sind der Lichtquellenposition 4 zugewandt, während die anderen von der Lichtquellenposition 4 abgewandt sind.

Die der Lichtquellenposition 4 zugewandten Reflexionsflächenbereiche 16-1 erstrecken sich vorzugsweise unter einem Winkel α zwischen 20 Grad und 45 Grad relativ zur gegenüberliegenden oberen Lichtleitoberfläche 16-1, vorzugsweise unter einem Winkel von ungefähr 30 Grad. Je kleiner dieser Winkel α ist, desto blendfreier ist das reflektierte Licht, welches aus der unteren Lichtleitoberfläche 14-2 austritt.

Die von der Lichtquellenposition 4 abgewandten Reflexionsflächenbereiche 16-2 erstrecken sich unter einem Winkel β von vorzugsweise zwischen 45 und 75 Grad relativ zu der ihnen gegenüberliegende obere Lichleitoberfläche 14-1, vorzugsweise unter einem Winkel von ungefähr 60 Grad.

Selbstverständlich sind auch Ausführungsformen möglich, bei welchen sowohl die der Lichtquellenposition zugewandten als auch die davon abgewandten Reflexionsflächenbereich 16-1 und 16-2 unter einem gleichen Winkel schräg zu der ihnen gegenüberliegenden Lichtleitoberfläche 14-1 sich erstrecken, beispielsweise unter einem Winkel von 45 Grad.

Gemäß bevorzugter Ausführungsformen der Erfindung sind die Reflexionsflächenbereich 16-1 und 16-2 durch die Seitenflächen von zueinander parallelen Rippen 20 gebildet. Die Rippen 20 haben vorzugsweise eine dachförmig spitze Form, wobei auch die zwischen ihnen gebildeten Wellentäler eine umgekehrt dachförmig spitze Form haben. Jedoch sind auch andere Formen möglich, z. B. eine Wellenform.

Diese Rippen 20 sind vorzugsweise an dem Reflektor 18 angeformt, beispielsweise durch ein Gieß-, Formpress- oder Walzverfahren. Der Reflektor 18 besteht vorzugsweise aus einer Metallplatte, vorzugsweise einer Aluminiumplatte. Die Reflexionsflächenbereiche 16-1 und 16-2 können beschichtet sein, bestehen jedoch vorzugsweise unbeschichtet nur aus dem Material des Reflektors 18.

Gemäß bevorzugter Ausführungsformen sind, im Rippenquerschnitt gesehen, etwa sechs bis acht Rippen 20 pro Zentimeter gebildet. Gemäß bevorzugter Ausführungsformen sind sieben Rippen pro Zentimeter vorgesehen. Jedoch sind auch wesentlich mehr oder wesentlich weniger Rippen pro Zentimeter möglich.

Ferner sind auch Ausführungsformen gemäß der Erfindung möglich, bei welchen die Reflexionsflächenbereiche 16-1 und 16-2 nicht in parallelen Reihen relativ zueinander angeordnet sind, sondern in anderen Richtungen. Dadurch ergeben sich beispielsweise keine Rippen und Rippen- Zwischentäler, sondern einzelne, beispielsweise spitze, Materialerhöhungen und dazwischen liegende Materialvertiefungen, welche zusammen die erste Lichtreflexionsfläche 16 des Reflektors 18 bilden.

Bei der in Fig. 1 gezeigten Ausführungsform liegt die erste Lichtreflexionsfläche 16 mit den Höhenbereichen 22, die zwischen ihren Reflexionsflächenbereichen 16-1 und 16-2 gebildet sind, auf der ersten Lichtleitoberfläche 14-1 auf. Diese Höhenbereiche 22 sind hier die Spitzen der vorzugsweise sägezahnförmigen Rippen 20.

Wenn es erwünscht ist, von der Leuchteneinheit 2 Licht der Lichtquelle 6 auch nach oben zu reflektieren, dann kann gemäß Fig. 1 auf der von der ersten Lichtleiterplatte 14 abgewandten Seite des Reflektors 18 eine zweite Lichtreflexionsfläche 26 vorgesehen werden, die in Richtung von der ersten Lichtleiterplatte 16 wegzeigt und in einem Lichtstrahlengang von Licht 8-5 liegt, welches von der in der Lichtquellenposition 4 angeordneten Lichtquelle 6 abgestrahlt wird.

Diese zweite Lichtreflexionsfläche 26 kann Licht an eine Decke oder an eine Wand strahlen, welches von dort als "indirektes" Licht in den zu beleuchtenden Raumbereich 12 reflektiert wird. Die zweite Lichtreflexionsfläche 26 kann eine glatte Fläche sein oder gleich wie die genannte erste Lichtreflexionsfläche 16 ausgebildet sein, wobei wieder eine große Vielzahl von schräg zueinander und schräg zu der Ebene der ersten Lichtleiterplatte 14 sich erstreckenden Reflexionsflächenbereiche 16-1 und 16-2 vorgesehen und angeordnet sind, wie dies vorstehend mit Bezug auf diese beschrieben wurde.

Gegenüber der zweiten Lichtreflexionsfläche 26, oder gegenüber einer diese ersetzenden Lichtreflexionsfläche in Form der ersten Lichtreflexionsfläche 16, kann ein zweiter Lichtleitkörper angeordnet werden, oder auch nicht. Es kann ihr gegenüber eine zweite Platte 28 angeordnet werden, welche aus lichtdurchlässigem Material besteht, beispielsweise eine übliche Glasplatte oder Kunststoffplatte ist. Sie ist vorzugsweise derart angeordnet, daß in ihre Stirnseite 10 Licht 8-5 der Lichtquelle 6 eindringen und auf die zweite Lichtreflexionsfläche 26 strahlen kann und von dieser durch die zweite Platte 28 hindurch nach oben aus der Leuchteneinheit 2 hinausreflektiert wird, wie es z. B. in Fig. 1 durch Lichtstrahlenpfeile 8-6 schematisch dargestellt ist.

Die zweite Platte 28 kann in gleicher Weise wie die erste Lichtleiterplatte 14 eine Lichtleiterplatte sein oder durch eine solche Lichtleiterplatte 14 ersetzt werden, welche durch ihre stirnseitige Lichteinleitfläche 14-3 bzw. 28-3 eingeleitetes Licht 8-4 zwischen ihrer der zweiten Lichtreflexionsfläche 26 zugewandten, unteren dritten Lichtleitoberfläche 28-1 und ihrer nach oben zeigenden vierten Lichleitoberfläche 28-2 durch diese zweite Platte 28 hindurchleitet. Die zweite Lichtleiterplatte 28 ist, wie auch die erste Lichtleiterplatte 14, derart ausgebildet, daß aus ihr Licht durch ihre Lichtleiteroberflächen 28-1 und 28-2 austreten kann. Dadurch tritt aus der nach oben zeigenden vierten Lichtleitoberfläche 28-2 nicht nur von der zweiten Lichtreflexionsfläche 26 reflektiertes Licht 8-6 aus, sondern auch Licht 8-7, welches auf der Innenseite der nach unten zeigenden dritten Lichtleiteroberfläche 28-1 derart reflektiert wird, daß es aus der oberen Lichtleiteroberfläche 28-2 austritt.

Die zweite Lichtreflexionsfläche 26 kann z. B. durch die Rückseite des ersten Reflektors 18 oder einen zweiten Reflektor 27 oder durch zwei erste Reflektoren 18 gebildet sein, die spiegelbildlich voneinander abgewandt angeordnet sind, so dass je die erste Lichtreflexionsfläche 16 gegen eine der beiden Lichtleiterplatten 14 bzw. 28 gerichtet ist.

Die von der Lichtquellenposition 4 abgewandte Stirnseite 10-2 ist vorzugsweise durch einen dritten Reflektor 38 abgeschlossen, dessen Lichtreflexionsfläche 38-1 gegen die erste Lichtreflexionsplatte 14 und die zweite Platte 28 zeigt.

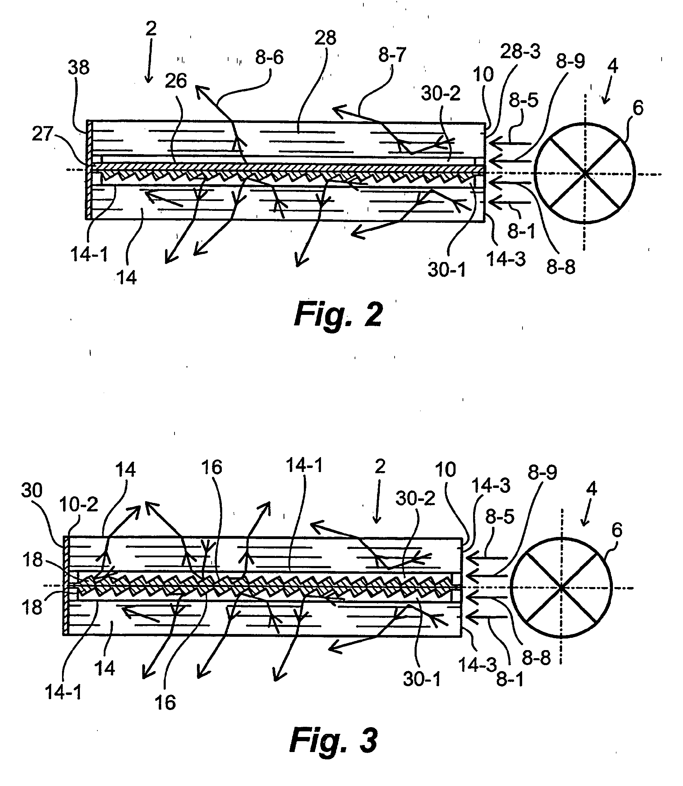

Gemäß Fig. 2 kann die erste Lichtreflexionsfläche 16 und/oder die zweite Lichtreflexionsfläche 26 einen Abstand von der ihr gegenüberliegenden ersten Lichtleitoberfläche 14-1 bzw. 28-1 haben, so dass zwischen ihnen je eine Abstandsspalt 30-1 bzw. 30-2 gebildet ist, in welchen Licht von der Lichtquelle 6 der Lichtquellenposition 4 eintreten kann, wie dies durch Lichtstrahlenpfeile 8-8 und 8-9 in Fig. 2 schematisch dargestellt ist. Dadurch wird die aus der Leuchteneinheit 2 nach unten und nach oben erzeugte Lichtstärke wesentlich erhöht.

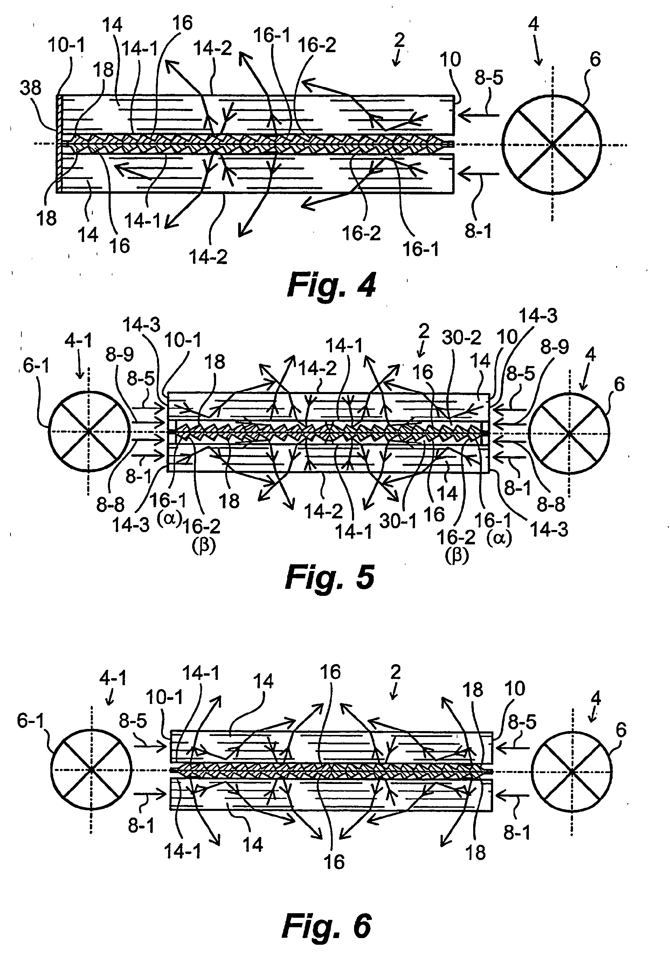

Bei den Auführungsformen nach Fig. 3 und 4 sind zwei erste Lichterplatten 14 und zwischen ihnen zwei entgegengesetzt zueinander angeordnete erste Reflektoren 18 vorgesehen. Die Lichtreflexionsflächen 16 der beiden Reflektoren 18 können von den ihnen gegenüberliegenden ersten Lichtleitoberflächen 14-1 einen Abstand 30-1 und 30-2 gemäß Fig. 3 haben oder ohne Abstand daran anliegen gemäß Fig. 4.

Die Ausführungsform von Fig .5 enthält eine Leuchteneinheit 2 ähnlich Fig. 3, die jedoch auf beiden Stirnseiten 10 und 10-1 lichtdurchlässig ist und je eine Lichteinleitfläche 14-3 aufweist, die je gegenüber einer Lichtquelle 6 bzw. 6-1 in einer ersten Lichtquellenposition 4 bzw. in einer zweiten Lichtquellenposition 4-1 angeordnet ist. Die beiden ersten Reflektoren 18 können aus einem einzigen Element oder aus einem oberen oder einem unteren Element oder gemäß Fig. 5 aus vier punktsymmetrisch angeordneten Elementen bestehen. Hierbei sind die Winkel α und β ab der halben Länge der Leuchteneinheit 2 nach rechts auf die erste Lichtquellenposition 4 und nach links auf die zweite Lichtquellenposition 4-1 ausgerichtet. Die Spitzen 22 der Erhöhungen oder Rippen 20 der Lichtreflexionsbereiche 16-1 und 16-2 der beiden ersten Lichtreflexionsflächen 16 können an den Lichtleiterplatten 14 anliegen oder gemäß Fig. 5 einen Abstandsspalt 30-1 und 30-2 dazwischen haben.

Fig. 6 zeigt eine der Fig. 5 entsprechende Ausführungsform, bei welcher jedoch jeweils die erste Lichtleitoberfläche 14-1 der beiden Lichtleiterplatten 14 oder nur eine davon auf der ihr gegenüberliegenden Lichtreflexionsfläche 16 der ersten Reflektoren 18 aufliegt.

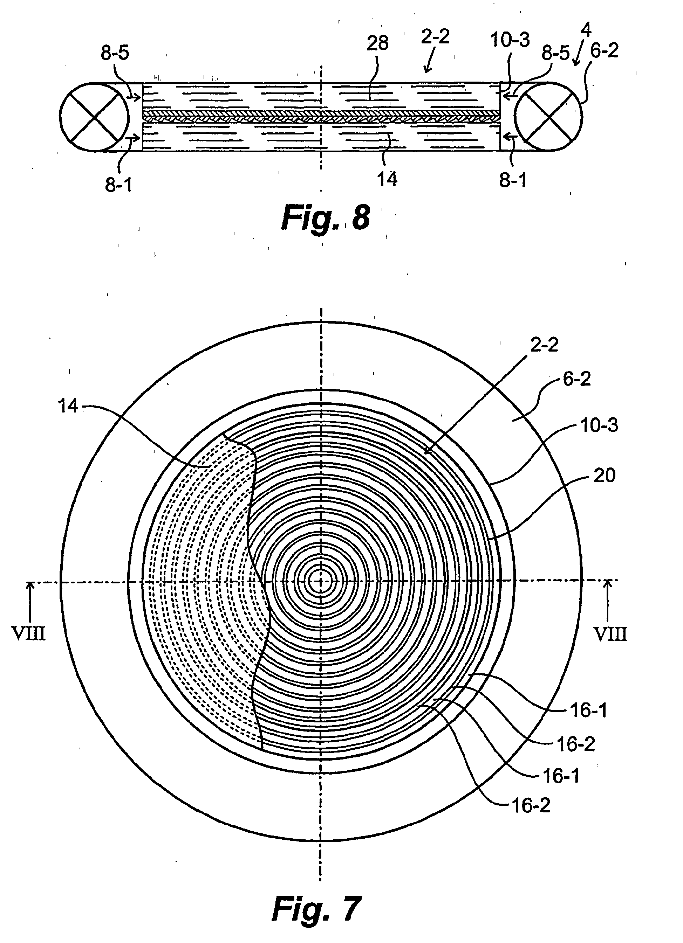

Die Fig. 7 und 8 zeigen eine kreisscheibenförmige Leuchte mit einer , kreisscheibenförmigen Leuchteneinheit 2-2, die von einer ringförmigen Leuchtröhre 6-2 umgeben ist, deren Licht in die ringförmige Stirnseite 10-3 der Leuchteneinheit 2-2 eingekoppelt wird. Die Ausführungsform entspricht der von Fig. 1, mit dem Unterschied, daß in Fig. 7 die Rippen 20 kreisförmig angeordnet sind, welche die entsprechend kreisförmigen Reflexionsflächenbereiche 16-1 und 16-2 bilden.

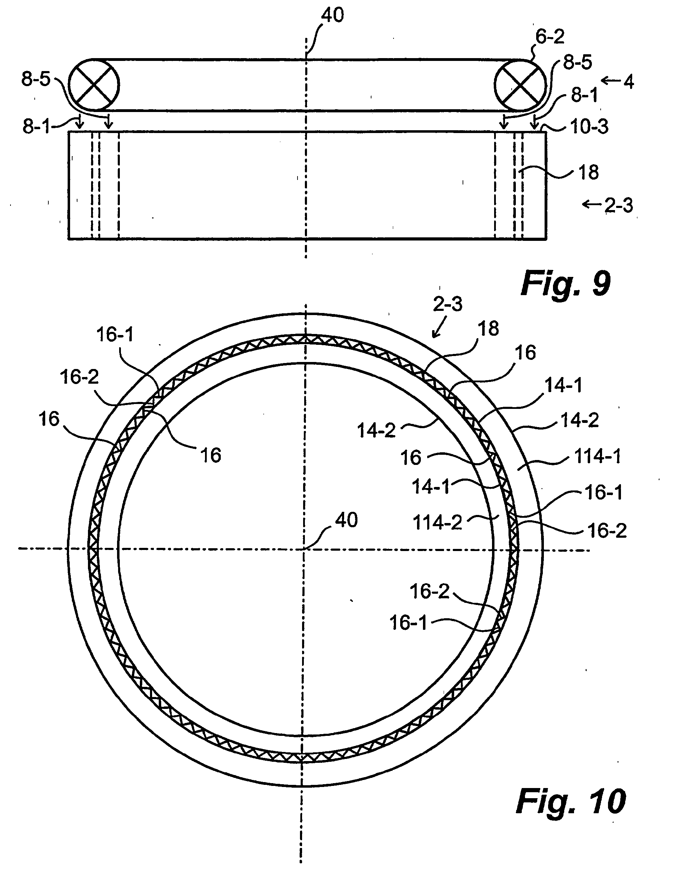

Bei der Ausführungsform nach Fig. 9 und 10 sind zwei Ringe 114-1 und 114-2 vorgesehen, von welchen mindestens einer aus lichtdurchlässigem Material besteht und mindestens einer ein Lichtleiter ist, wobei die Umfangsflächen erste und zweite Lichtleiteroberflächen 14-1 bzw. 14-2 bilden. In Fig. 9 und 10 sind beide Ringe als Lichtleiter dargestellt. Zwischen diesen beiden Ringen ist ein Reflektor 18 angeordnet, welcher sowohl radial nach außen zeigende als auch radial nach innen zeigende erste Lichtreflexionsflächen 16 entsprechend Fig. 1 aufweist, welche in Umfangsrichtung gerichtete erste und zweite Lichtreflexionsflächenbereiche 16-1 und 16-2 haben. Diese können rippenförmig entsprechend den Rippen 20 sein und parallel zur Ringachse 40 verlaufen, oder schräg dazu verlaufen oder aus einer Vielzahl von untereinander schräg sein, so dass keine durchgehenden Rippen und Täler gebildet werden. Die ringförmige Leuchtstoffröhre 6-2 ist gegenüber einer Stirnseite 10-3 der ringförmigen Leuchteneinheit 2-3 angeordnet.

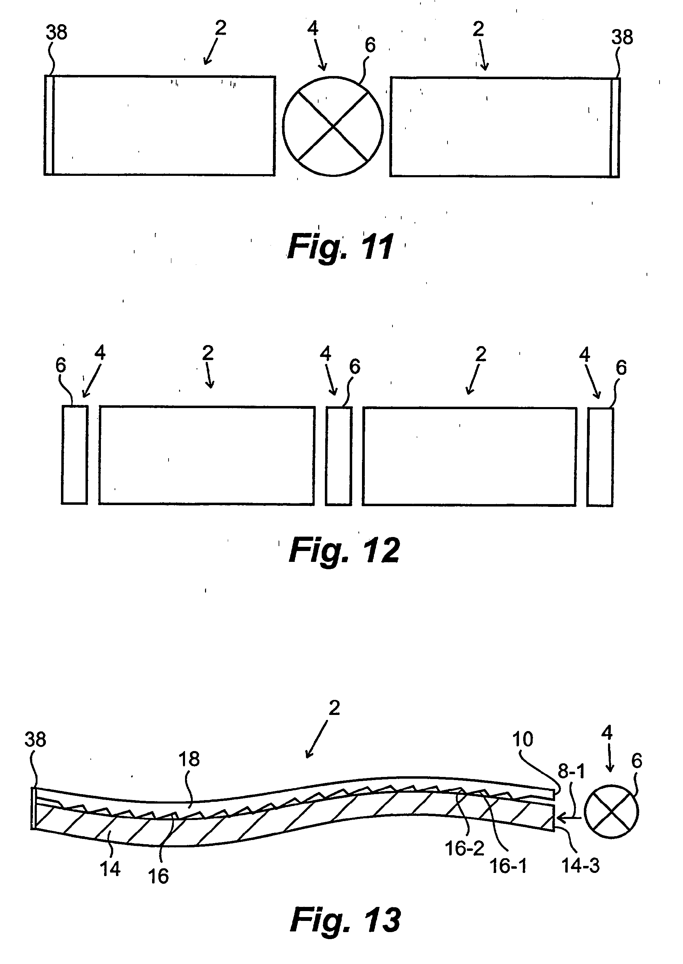

Fig. 11 zeigt schematisch eine Seitenansicht einer Leuchte mit zwei Leuchteneinheiten 2 nach einer der Fig. 1 bis 6 und einer einzigen, in beide Leuchteinheiten 2 Licht strahlenden Lichtquelle 6 an einer zwischen ihnen angeordneten Lichtquellenposition 4.

Fig. 12 zeigt schematisch eine Leuchte mit zwei Leuchteneinheiten 2 nach einem der Fig .1 bis 6 mit einer zwischen ihnen angeordneten Lichtquelle 6 und auf beiden Außenseiten von ihnen angeordneten weiteren Lichtquellen 6, so dass insgesamt drei Lichtquellenpositionen 4 vorgesehen sind. Hierbei sind die Leuchteneinheiten 2 jeweils an beiden Stirnseiten 10 und 10-1 lichtdurchlässig, wie dies,in den Fig. 5 und 6 als Beispiele gezeigt ist.

Fig. 13 zeigt eine Ausführungsform ähnlich Fig. 1, jedoch nicht in ebener, sondern in bogenförmiger Gestalt. Teilen von Fig. 1 entsprechende Teile sind mit gleichen Bezugszahlen versehen, so dass auf die dortige Beschreibung verwiesen wird.

## Patentansprüche

1. Leuchte mit mindestens einem ersten Lichtleiter (14), der zwei voneinander abgewandte Lichtleitoberflächen (14-1, 14-2) zur Führung von Licht durch den Lichtleiter und mindestens eine quer dazu angeordnete Lichteinleitfläche (14-3) zum Einleiten von Licht von einer Lichtquellenposition (4) in den Lichtleiter (14) aufweist, wobei die Lichtleitoberflächen (14-1, 14-2) und die mindestens eine Lichteinleitfläche (14-3) lichtdurchlässig sind,
**dadurch gekennzeichnet,**
**daß** gegenüber einer ersten (14-1) der beiden Lichtleitoberflächen (14-1, 14-2) eine erste Lichtreflexionsfläche (16) eines lichtundurchlässigen Reflektors (18) angeordnet ist, die eine große Vielzahl von schräg zueinander und schräg zu der ersten Lichtleitoberfläche (14-1) sich erstreckenden Reflexionsflächenbereiche (16-1, 16-2) aufweist, welche aus der ersten Lichtleitoberfläche (14-1) austretendes Licht durch diese Lichtleitoberfläche (14-1) hindurch in den ersten Lichtleiter (14) hinein zurückreflektieren, wobei mindestens ein Teil des reflektierten Lichtes zusammen mit nicht reflektiertem Licht durch die zweite Lichtleitoberfläche (14-2) aus dem ersten Lichtleiter (14) im Wesentlichen blendfrei austritt.

2. Leuchte nach Anspruch 1,
**dadurch gekennzeichnet,**
**daß** mindestens einige der Reflexionsflächenbereiche (16-1, 16-2) der Lichtquellenposition (4) zugewandt sind.

3. Leuchte nach Anspruch 2,
**dadurch gekennzeichnet,**
**daß** die der Lichtquellenposition (4) zugewandten Reflexionsflächenbereiche (16-1) unter einem Winkel a zwischen 20 Grad und 45 Grad, vorzugsweise 30 Grad, relativ zur ersten Lichtleitoberfläche (14-1) sich erstrecken.

4. Leuchte nach einem der vorhergehenden Ansprüche,
**dadurch gekennzeichnet,**
**daß** die Reflexionsflächenbereiche (16-1, 16-2) durch die Seitenfläche von zueinander parallelen Rippen (20) gebildet sind.

5. Leuchte nach einem der vorhergehenden Ansprüche,
**dadurch gekennzeichnet,**
**daß** die Reflexionsflächenbereiche (16-1, 16-2) durch eine Metallplatte oder auf einer Metallplatte gebildet sind.

6. Leuchte nach einem der vorhergehenden Ansprüche,
**dadurch gekennzeichnet,**
**daß** die erste Lichtreflexionsfläche (16) mit Abstand (30-1, 30-2) von der ersten Lichtleitoberfläche (16-1) angeordnet ist.

7. Leuchte nach Anspruch 6,
**dadurch gekennzeichnet,**
**daß** von der Lichtquellenposition (4) ein Lichtstrahlengang (8-1) zur Lichteinleitfläche (14-3) des ersten Lichtleiters (14) und ein Lichtstrahlengang (8-8, 8-9) in den Abstandsbereich (30-1, 30-2) zwischen der ersten Lichtreflexionsfläche (16) und der ersten Lichtleitoberfläche (14-1) vorgesehen ist.

8. Leuchte nach einem der Ansprüche 1 bis 5,
**dadurch gekennzeichnet,**
**daß** die erste Lichtreflexionsfläche (16-1) mit Höhenbereichen (22), die zwischen ihren Reflexionsflächenbereichen (16-1, 16-2) gebildet sind, auf der ersten Lichtleitoberfläche (14-1) des Lichtleiters (14) aufliegt.

9. Leuchte nach einem der vorhergehenden Ansprüche,
**dadurch gekennzeichnet,**
**daß** auf der vom ersten Lichtleiter (14) abgewandten Seite des Reflektors (18) eine zweite Lichtreflexionsfläche (16; 26) vorgesehen ist, die in Richtung vom ersten Lichtleiter (14) weg zeigt und in einem Lichtstrahlengang (8-5) liegt, der von der Lichtquellenposition (4) ausgeht.

10. Leuchte nach Anspruch 9,
**dadurch gekennzeichnet,**
**daß** die zweite Lichtreflexionsfläche (26) eine große Vielzahl von schräg zu einander und schräg zu der Ebene des ersten Lichtleiters (14) sich erstreckende Reflektionsflächenbereiche (16-1, 16-2) aufweist.

11. Leuchte nach Anspruch 9 oder 10,
**dadurch gekennzeichnet,**
**daß** gegenüber der zweiten Lichtreflexionsfläche (16; 26) eine Platte (14; 28) aus lichtdurchlässigem Material angeordnet ist, durch welche Licht von der zweiten Lichtreflexionsfläche (16; 26) hindurchreflektierbar ist.

12. Leuchte nach Anpruch 11,
**dadurch gekennzeichnet,**
**daß** die lichtdurchlässige Platte (14; 28) mit Abstand (30-2) von der zweiten Lichtreflexionsfläche (16; 26) angeordnet ist.

13. Leuchte nach Anspruch 12,
**dadurch gekennzeichnet,**
**daß** von der Lichtquellenposition (4) ein Lichtstrahlengang (8-9) in den Abstandsbereich (30-2) zwischen der zweiten Lichtreflexionsfläche (16; 26) und der lichtdurchlässigen Platte (14; 28) vorgesehen ist.

14. Leuchte nach Anspruch 11,
**dadurch gekennzeichnet,**
**daß** die lichtdurchlässige Platte (14; 28) auf der zweiten Lichtreflexionsfläche (16; 26) anliegt.

15. Leuchte nach einem der Ansprüche 11 bis 14,
**dadurch gekennzeichnet,**
**daß** die lichtdurchlässige Platte (14; 28) ein Lichtleiter ist, der zwei voneinander abgewandte Lichtleitoberflächen (14-1, 14-2; 28-1, 28-2) aufweist, von welchen eine Lichtleitoberfläche (14-1; 28-1) der zweiten Lichtreflexionsfläche (16; 26) zugewandt ist, und eine Lichteinleitfläche (14-3; 28-3) aufweist, welche der Lichtquellenposition (4) gegenüberliegt.

16. Leuchte nach einem der vorhergehenden Ansprüche,
**dadurch gekennzeichnet,**
**daß** eine zweite Lichtquellenposition (4-1) auf einer von der ersten Lichtquellenposition (4) abgewandten Seite des mindestens einen Lichtleiters (14; 28) gegenüber einer zweiten lichtdurchlässigen Lichteinleitfläche dieses mindestens einen Lichtleiters (14; 28) angeordnet ist, um Licht von beiden Lichtquellenpositionen (4; 4-1) in einander entgegengesetzten Richtungen in den mindestens einen Lichtleiter (14; 28) einzubringen, darin zu kombinieren und dann vereinigt abzustrahlen.

## Claims

1. Luminaire with at least one first optical waveguide (14) having two light-guiding surfaces (14-1, 14-2), which face away from one another, for guiding light through the optical waveguide, and having at least one light-input face (14-3), which is arranged transversely with respect thereto, for inputting light from a light-source position (4) into the optical waveguide (14), wherein the light-guiding surfaces (14-1, 14-2) and the at least one light-input face (14-3) are permeable to light, **characterized in that** a first light reflection face (16) of an opaque reflector (18) is arranged opposite a first (14-1) of the two light-guiding surfaces (14-1, 14-2) and has a large number of reflection-face regions (16-1, 16-2), which extend at an angle to one another and at an angle to the first light-guiding surface (14-1) and reflect back light emerging from the first light-guiding surface (14-1) through said light-guiding surface (14-1) into the first optical waveguide (14), wherein at least part of the reflected light, together with non-reflected light, emerges through the second light-guiding surface (14-2) from the first optical waveguide (14) substantially without glare.

2. Luminaire according to Claim 1, **characterized in that** at least some of the reflection-face regions (16-1, 16-2) face the light-source position (4).

3. Luminaire according to Claim 2, **characterized in that** the reflection-face regions (16-1) facing the light-source position (4) extend at an angle α of between 20 degrees and 45 degrees, preferably 30 degrees, relatively to the first light-guiding surface (14-1).

4. Luminaire according to one of the preceding claims, **characterized in that** the reflection-face regions (16-1, 16-2) are formed by the side face of mutually parallel ribs (20).

5. Luminaire according to one of the preceding claims, **characterized in that** the reflection-face regions (16-1, 16-2) are formed by a metal plate or on a metal plate.

6. Luminaire according to one of the preceding claims, **characterized in that** the first light-reflection face (16) is arranged at a distance (30-1, 30-2) from the first light-guiding surface (16-1).

7. Luminaire according to Claim 6, **characterized in that**, from the light-source position (4), a light-beam path (8-1) is provided to the light-input face (14-3) of the first optical waveguide (14), and a light-beam path (8-8, 8-9) to the distance region (30-1, 30-2) between the first light-reflection face (16) and the first light-guiding surface (14-1).

8. Luminaire according to one of Claims 1 to 5, **characterized in that** the first light-reflection face (16-1) with height regions (22), which are formed between the reflection-face regions (16-1, 16-2) of the first light-reflection face (16-1), bears on the first light-guiding surface (14-1) of the optical waveguide (14).

9. Luminaire according to one of the preceding claims, **characterized in that** a second light-reflection face (16; 26) is provided on that side of the reflector (18) which faces away from the first optical waveguide (14), facing in the direction away from the first optical waveguide (14) and lies on a light-beam path (8-5) emanating from the light-source position (4).

10. Luminaire according to Claim 9, **characterized in that** the second light-reflection face (26) has a large number of reflection-face regions (16-1, 16-2), which extend at an angle to one another and at an angle to the plane of the first optical waveguide (14).

11. Luminaire according to Claim 9 or 10, **characterized in that** a plate (14; 28) made of light-permeable material, through which light can be reflected from the second light-reflection face (16; 26), is arranged opposite the second light reflection face (16; 26).

12. Luminaire according to Claim 11, **characterized in that** the light-permeable plate (14; 28) is arranged at a distance (30-2) from the second light-reflection face (16; 26).

13. Luminaire according to Claim 12, **characterized in that**, from the light-source position (4), a light-beam path (8-9) is provided into the distance region (30-2) between the second light-reflection face (16; 26) and the light-permeable plate (14; 28).

14. Luminaire according to Claim 11, **characterized in that** the light-permeable plate (14; 28) bears on the second light-reflection face (16; 26).

15. Luminaire according to one of Claims 11 to 14, **characterized in that** the light-permeable plate (14; 28) is an optical waveguide having two light-guiding faces (14-1, 14-2; 28-1, 28-2) which face away from one another, one light-guiding surface (14-1, 28-1) of which faces the second light-reflection face (16; 26), and having a light-input face (14-3; 28-3), which is opposite the light-source position (4).

16. Luminaire according to one of the preceding claims, **characterized in that** a second light-source position (4-1) is arranged on one side, which faces away from the first light-source position (4), of the at least one optical waveguide (14; 28) and opposite a second light-permeable light-input face of said at least one optical waveguide (14; 28) in order to inject light into the at least one optical waveguide (14; 28) from both light-source positions (4; 4-1) in mutually opposite directions, to combine it therein and then to emit it in its combined state.

## Revendications

1. Luminaire, avec au moins un premier guide d'ondes optiques (14), comportant deux surfaces de guide d'ondes optiques mutuellement opposées (14-1, 14-2) pour guider de la lumière à travers le guide d'ondes optiques et au moins une surface d'introduction de lumière (14-3) disposée à la transversale de ce dernier, pour introduire de la lumière à partir d'une position d'une source lumineuse (4) dans le guide d'ondes optiques (14), les surfaces de guide d'ondes optiques (14-1, 14-2) et la au moins une surface d'introduction de la lumière (14-3) étant transparentes,
**caractérisé en ce que**
en face d'une première (14-1) des deux surfaces de guide d'ondes optiques (14-1, 14-2) est disposée une première surface de réflexion lumineuse (16), d'un réflecteur transparent (18) qui comporte une grande pluralité de zones de surfaces de réflexion (16-1, 16-2) s'étendant mutuellement en oblique et en oblique par rapport à la première surface de guide d'ondes optiques (14-1), qui rétroréfléchissent de la lumière sortant de la première surface de guide d'ondes optiques (14-1) à travers ladite surface de guide d'ondes optiques (14-1) dans le premier guide d'ondes optiques (14), au moins une partie de la lumière réfléchie sortant sans éblouissement du guide d'ondes optiques (14) ensemble avec de la lumière non réfléchie à travers la deuxième surface de guide d'ondes optiques (14-2).

2. Luminaire selon la revendication 1,
**caractérisé en ce que**
au moins certaines des zones de surfaces de réflexion (16-1, 16-2) sont dirigées vers la position de source lumineuse (4).

3. Luminaire selon la revendication 2,
**caractérisé en ce que**
les zones de surfaces de réflexion (16-1) dirigées vers la position de source lumineuse (4) s'étendent sous un angle α compris entre 20 degrés et 45 degrés, de préférence 30 degrés, par rapport à la première surface de guide d'ondes optiques (14-1).

4. Luminaire selon l'une quelconque des revendications précédentes,
**caractérisé en ce que**
les zones de surfaces de réflexion (16-1, 16-2) sont formées par les surfaces latérales de nervures (20) mutuellement parallèles.

5. Luminaire selon l'une quelconque des revendications précédentes,
**caractérisé en ce que**
les zones de surfaces de réflexion (16-1, 16-2) sont formées par une plaque métallique ou sur une plaque métallique.

6. Luminaire selon l'une quelconque des revendications précédentes,
**caractérisé en ce que**
la première surface de réflexion lumineuse (16) est disposée à distance (30-1, 30-2) de la première surface de guide d'ondes optique (16-1).

7. Luminaire selon la revendication 6,
**caractérisé en ce que**
à partir de la position de source lumineuse (4) est prévue une trajectoire de faisceau lumineux (8-1) vers la surface d'introduction de lumière (14-3) du premier guide d'ondes optiques (14) et une trajectoire de faisceau lumineux (8-8, 8-9) dans la zone de distance (30-1, 30-2) entre la première surface de réflexion lumineuse (16) et la première surface de guide d'ondes optiques (14-1).

8. Luminaire selon l'une quelconque des revendications 1 à 5,
**caractérisé en ce que**
avec des zones de hauteur (22) qui sont formées entre ses zones de surfaces de réflexion (16-1, 16-2), la première surface de réflexion lumineuse (16-1) repose sur la première surface de guide d'ondes optiques (14-1) du guide d'ondes optiques (14).

9. Luminaire selon l'une quelconque des revendications précédentes,
**caractérisé en ce que**
sur le côté du réflecteur (18) qui est opposé au premier guide d'ondes optiques (14) est prévue une deuxième surface de réflexion lumineuse (16 ; 26), qui part en direction du premier guide d'ondes optiques (14) et qui se situe dans une trajectoire de faisceau lumineux (8-5) qui part de la position de source lumineuse (4).

10. Luminaire selon la revendication 9,
**caractérisé en ce que**
la deuxième surface de réflexion lumineuse (26) comporte une grande pluralité de zones de surfaces de réflexion (16-1, 16-2) s'étendant mutuellement en oblique et en oblique par rapport au plan du premier guide d'ondes optiques (14).

11. Luminaire selon la revendication 9 ou 10,
**caractérisé en ce que**
en face de la deuxième surface de réflexion lumineuse (16 ; 26) est disposée une plaque (14 ; 28) en matière transparente, à travers laquelle de la lumière peut être réfléchie à partir de la deuxième surface de réflexion lumineuse (16 ; 26).

12. Luminaire selon la revendication 11,
**caractérisé en ce que**
la plaque transparente (14 ; 28) est disposée à distance (30-2) de la deuxième surface de réflexion lumineuse (16 ; 26).

13. Luminaire selon la revendication 12,
**caractérisé en ce que**
à partir de la position de source lumineuse (4) est prévue une trajectoire de faisceau lumineux (8-9) dans la zone de distance (30-2) entre la deuxième surface de réflexion lumineuse (16 ; 26) et la plaque transparente (14 ; 28).

14. Luminaire selon la revendication 11,
**caractérisé en ce que**
la plaque transparente (14 ; 28) est adjacente à la deuxième surface de réflexion lumineuse (16 ; 26).

15. Luminaire selon l'une quelconque des revendications 11 à 14,
**caractérisé en ce que**
la plaque transparente (14 ; 28) est un guide d'ondes optiques, qui comporte deux surfaces de guide d'ondes optiques (14-1, 14-2 ; 28-1, 28-2) parmi lesquelles une surface de guide d'ondes optiques (14-1 ; 28-1) est dirigée vers la deuxième surface de réflexion lumineuse (16 ; 26) et comporte une surface d'introduction de lumière (14-3 ; 28-3) qui fait face à la position de source lumineuse (4).

16. Luminaire selon l'une quelconque des revendications précédentes,
**caractérisé en ce que**
une deuxième position de source lumineuse (4-1) est disposée sur un côté opposé à la première position de source lumineuse (4) du au moins un guide d'ondes optiques (14 ; 28), en face d'une deuxième surface d'introduction de lumière transparente de ce au moins un guide d'ondes optiques (14 ; 28), pour introduire de la lumière des deux positions de source lumineuse (4 ; 4-1) dans des directions mutuellement opposées dans le au moins un guide d'ondes optiques (14 ; 28), les associer dans ce dernier et les émettre ensuite ensemble.
